# EUROPEAN PATENT SPECIFICATION

(11) **EP 3 217 813 B1**
(45) Date of publication and mention of the grant of the patent: **15.08.2018**
(21) Application number: 15784281.6
(22) Date of filing: 22.10.2015
(51) Int. Cl.: A23L 27/30, A23L 27/00, A23L 2/56, A23L 2/60

(54) **COMPOSITION COMPRISING GLUCOSYLATED STEVIOL GLYCOSIDES**
ZUSAMMENSETZUNG MIT GLUCOSYLIERTEN STEVIOLGLYCOSIDEN
COMPOSITION COMPRENANT DES GLYCOSIDES DE STÉVIOL GLUCOSYLÉ

(30) Priority: 10.11.2014 EP 14003778
(43) Date of publication of application: 20.09.2017
(73) Proprietor: ADM WILD Europe GmbH & Co. KG, 69214 Eppelheim (DE)
(72) Inventor: HEIDEBACH, Thomas, 14624 Dallgow-Döberitz (DE); SATTLER, Robert, 68723 Oftersheim (DE); DE WITH, Axel, 68723 Plankstadt (DE); SASS, Matthias, 68723 Oftersheim (DE)
(74) Representative: Grünecker Patent- und Rechtsanwälte PartG mbB
(86) International application number: PCT/EP2015/002094
(87) International publication number: WO 2016/074761

(56) References cited:
- EP-A1- 2 292 103
- WO-A1-2012/129451
- US-A1- 2007 082 102

## Description

The present invention relates to a composition comprising a mixture of steviol glycosides comprising at least one glucosylated steviol glycoside, and a natural masking agent, said natural masking agent being obtainable from carob and/or a citrus fruit, a flavor modifier, flavor enhancer or sweetness enhancer comprising said composition, the use of said composition and a method of making the composition.

Steviol glycosides are a group of molecules with high intensity sweetening properties. They are up to 250 times sweeter than sucrose. Steviol glycosides can be found in high concentrations of up to 10 % in leaves of the plant *Stevia rebaudiana.*

The two major steviol glycosides found in the leaves of the stevia plant are stevioside and rebaudioside A. Several other minor steviol glycosides are present, such as rebaudioside C, dulcoside, rubusoside, steviolbioside, rebaudioside B, rebaudioside D, rebaudioside E and rebaudioside F. The individual steviol glycosides differ in sweetness intensity and quality of taste. The quality of taste is often associated with the intensity of a liquorice or bitter aftertaste or a "pure" sweet taste.

Concentrated isolates of steviol glycosides from crude stevia extracts are approved for use as high intensity sweeteners within the EU. They can also be used within the preparation of flavors, flavor modifiers, flavor enhancers and sweetness enhancers, e.g. as described in US patent 4,612,942 from 1984.

Steviol glycoside-enriched extracts from *Stevia rebaudiana* leaves in various degrees of purification have been used as substrates for transglucosylation.

Transglucosylation leads to the addition of glucose molecules to the various steviol glycoside molecules and thus results in an increase in their molecular weight. The glucose units can be attached at two different positions in the steviol glycoside molecule (C-13 or C-19). The quantity of attached glucose units is usually between one and five and sometimes even more. The exact kinetics of the formation of the individual glucosylated steviol glycosides during the enzymatic transglucosylation process is not yet fully understood (Lu et al., 2014: "Transglycosylation specificity of glycosyl donors in transglycosylation of stevioside catalyzed by cyclodextrin glucanotransferase", Food Chem., 159, 151-156). Each of the newly formed glucosylated steviol glycosides can exhibit different properties in terms of sweetness intensity and quality of taste due to the transglucosylation. These can generally be either improved or deteriorated in comparison to the original substrate molecule. As a consequence, in the last twenty years there has been a lot of effort to identify substrates and processes which achieve an overall improvement in the quality of steviol glycosides or mixtures thereof by enzymatic glucosylation with transglucosidases (Tanaka, O. et al., 1997: "Improvement of taste of natural sweeteners", Pure & Appl. Chem., 69 (4), 675-683; Li et al., 2013: "Transglycosylation of stevioside to improve the edulcorant quality by lower substitution using cornstarch hydrolyzate and CGTase", Food Chem., 138, 2064-2069).

Flavors with modifying properties (flavor modifiers) are a defined class of substances. The EU commission recently published a guidance note on the classification of flavoring substances with modifying properties and flavor enhancers (FL/14/20). Flavoring substances with modifying properties are used to change the individual characteristics of the flavor of a food. Flavor modification effects can include increasing, decreasing, or changing the perception of individual relevant sensorial characteristics of flavor of the food. The ability of flavoring substances with modifying properties to modify flavor can be independent of their aromatic or taste characteristics. For example, when glucosylated steviol glycosides (which at higher concentrations taste sweet) are added to a flavoring which is then added to a food, it is able to increase specific characteristics, such as the perceived fruitiness or jammy character of the flavoring. At the same time, it increases the perceived sweetness of the food at a balanced level, compared to other changed characteristics.

The use of high intensity sweeteners such as steviol glycosides or glucosylated steviol glycosides as a conceptional part of flavor modifiers is known. In this case, the application level of the high intensity sweetener within the flavor modifier composition itself is below sweetness detection level threshold. However, the same concentration added to a fruit juice may synergistically act with the sugar or sweetener in the juice and thus lead to an overall increase in sweetness, besides other desired flavor characteristics. Thus, steviol glycosides as well as glucosylated steviol glycosides can be used as a flavor modifiers and/or sweetness- or flavor enhancers.

The general use of diterpene glycosides, such as steviol glycosides and derivates as part of flavors with modifying properties in foodstuff is described in US patent 4,612,942. However, sweetness intensity often correlates with undesired aftertaste. This means, the lower the sweetness intensity of a steviol glycoside, often the higher is the unwanted aftertaste.

On this account, glucosylation of steviol glycosides can be very useful if used for flavor modifiers, sweetness- or flavor enhancers, since glucosylation can lead to a parallel decrease of sweetness and unwanted off-flavor. If the sweetness intensity of a steviol glycoside is decreased by glucosylation, a higher maximum concentration can be applied if used as a flavor modifier. On this account, modifying properties can be increased, if the concentration of the modifying substance is increased. This concept is described in patent WO-A-2012/129451.

Steviol glycosides and glucosylated steviol glycosides are also used as sweeteners. In this case, they are applied in multiple higher concentrations compared to the levels if used as flavor modifiers. In this case the problem of an unwanted bitter or metallic aftertaste frequently occurs. To avoid this, EP 2292103 describes a sweetening composition comprising steviol glycosides in combination with a family of natural masking agents which are capable to successfully mask the typical undesired bitter or metallic off-flavors EP 2292103 shows that addition of a masking agent to 0.18 g/L Rebaudioside A among others significantly reduces the bitter intensity and the sourness of a respective aqueous solution. All together the addition of a masking agent leads to a cleaner sweet taste. However, EP 2292103 does not describe glucosylated steviol glycoside for use as flavor modifiers or enhancers.

The problem underlying the present invention is to provide a composition having flavor modifying, sweetness enhancing and/or flavor enhancing properties and which contains natural components.

Said problem is solved by a composition comprising a) a mixture of steviol glycosides comprising at least one glucosylated steviol glycoside, and b) a natural masking agent, said natural masking agent being obtainable from carob and/or a citrus fruit by a process comprising the steps of: i) obtaining an aqueous extract from carob and/or an aqueous extract from a citrus fruit; ii) fractionating the product of step i) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides; and iii) mixing the first fraction and the second fraction.

The present invention further provides a flavor modifier, flavor enhancer or sweetness enhancer comprising the composition of the present invention.

The present invention also provides a foodstuff comprising the flavor modifier, flavor enhancer or sweetness enhancer according to the present invention.

The present invention is further directed to the use of the composition according to the present invention as a flavor modifier, flavor enhancer or sweetness enhancer.

The invention also provides a method of preparing the composition of the present invention comprising the steps of: i) intermolecular transglucosylating at least one steviol glycoside to obtain a mixture of steviol glycosides comprising at least one glucosylated steviol glycoside; ii) obtaining an aqueous extract from carob and/or an aqueous extract from a citrus fruit; iii) fractionating the product of step ii) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides; iv) mixing the first fraction and the second fraction; and v) mixing the glucosylated steviol glycoside of step i) and the mixture of step iv).

Preferred embodiments of the present invention are set forth in subclaims 2 to 8, 12, 13, and 15.

Within the present invention it was found that the addition of a natural masking agent made of aqueous extracts of a citrus fruit and/or carob to a mixture of steviol glycosides comprising at least one glucosylated steviol glycoside provides a composition, which can be used as a flavor modifier, flavor enhancer or sweetness enhancer. Surprisingly, the addition of the masking agent increased the modifying properties of glucosylated steviol glycosides if used as a flavor modifier (in comparison without using a masking agent). Furthermore, the addition of the masking agent does not impede the suitability of its use as a flavor modifier, sweetness enhancer or flavor enhancer by increasing the sweetness intensity. Moreover, the composition improves the all-over sensory acceptance if used as a flavor modifier, sweetness enhancer or flavor enhancer.

The term "extract" is used representatively for all products that are obtained from a plant by means of an extraction with a solvent, such as with maceration or percolation. The extract may be in a liquid, semi-solid or solid form.

As for the extraction, the parts of the plant are submitted either in the raw state or dried to maceration or percolation. In a preferred embodiment, in combination with any of the above or below embodiments, dried plant material is used.

The plant parts can be broken into small pieces in a suitable manner before the extraction. This can be done, for example, by rubbing or cutting them. Alternatively, the plant parts can be pressed out in the raw state, e.g. directly after the harvest, in order to produce a juice from pressing before the extraction.

Generally, an extraction of the plant parts is performed with a suitable solvent. Usually, the solvent for an extraction is selected from water, alcohols such as methanol, ethanol or isopropyl alcohol, or chlorinated solvents such as dichloromethane, as well as acetone, acetyl acetone, ethyl acetate, ammonia or glacial acetic acid. As another suitable solvent supercritical carbon dioxide can be used. Mixtures of two or more of the above-mentioned solvents can also be used for an extraction. Fats such as pork fat, waxes such as beeswax, or oils such as olive oil and almond oil, can also be used for an extraction.

In order to achieve the highest possible yield, the plant material can be extracted a number of times. For instance, the extraction can be repeated 2 to 6 times, e.g. 3 times. In this case, it is also possible to use different solvents in the various extraction steps or an extraction with a solvent can be followed by an extraction with fat, wax or oil, or vice versa.

The term "aqueous extract" refers to an extract wherein water is used as main solvent, i.e. more than 50 % by weight based on the total weight of the solvents. In a preferred embodiment in combination with any of the above or below embodiments, water is used as sole solvent.

The crude extraction product can also be concentrated, dried and/or further processed before use. To produce a dry extract, the solvent can be evaporated from the liquid raw extract, the concentrated extract or the cleaned extract by, for example, spray drying, freeze drying or vacuum drying. The further processing can include cleaning steps known to the person skilled in the art, such as centrifugation, filtration and decantation, in order to remove suspended materials from the extract. Chromatography, such as column chromatography, gas chromatography, HPLC or steam distillation may also be used for purification. In a preferred embodiment, in combination with any of the above or below embodiments, the crude product is used without further purification steps.

The term "glucosylated steviol glycoside" refers to a steviol glycoside which is further glucosylated. Usually, the glucosylated steviol glycoside is obtained by intermolecular transglucosylating a steviol glycoside or a mixture of steviol glycosides. The intermolecular transglucosylation is a procedure well-known to the person skilled in the art. In a transglycosylation reaction a sugar molecule is added. If glucose is used as particular sugar, the transglycosylation reaction is a transglucosylation. Transglucosylation leads to the addition of glucose molecules to the steviol glycoside molecules and thus results in an increase in their molecular weight. The glucose units can be attached at two different positions in the steviol glycoside molecule (C-13 or C-19). The quantity of attached glucose units is usually between one and five and sometimes even more.

The terms "flavor modifier" and "flavoring substance with modifying properties" are used synonymously in the present invention and refer to a substance which is added to food to impart or modify the taste and/or odor. The flavor modifier itself can be tasteless and/or odorless. A flavor modifier is able to impact the time onset and duration of the perception of specific aspects of the flavor profile of a foodstuff, and/or reduce specific off-flavor notes, e.g. metallic flavor, and/or intensify specific flavor characteristics, e.g. increase the perceived fruitiness, and/or reduce specific flavor characteristics, e.g. reduce bitterness.

The term "flavor enhancer" refers to a substance which enhances the existing taste and/or odor of a foodstuff. The flavor enhancer is added to foodstuff to amplify the existing taste and or/odor of the foodstuff, and/or increase the overall perception of all flavor characteristics, and/or increase a single flavor perception so significantly that it is out of balance relative to the other flavor characteristics.

The term "sweetness enhancer" refers to a substance which enhances the sweetness of a foodstuff.

The term "sweetness detection level" refers to the amount, which has to present in order to taste the sweetness. The sweetness detection level of the composition according to the present invention is higher than the amount required to act as flavor modifier, flavor enhancer or sweetness enhancer.

In a preferred embodiment in combination with any of the above or below embodiments, component a), i.e. the mixture of steviol glycosides comprising at least one glucosylated steviol glycoside is obtainable by an intermolecular transglucosylation of at least one steviol glycoside.

In a preferred embodiment in combination with any of the above or below embodiments, the steviol glycoside is selected from rebaudioside A, rebaudioside B, rebaudioside C, rebaudioside D, rebaudioside E, stevioside, dulcoside A or any combination thereof. More preferably, the steviol glycoside is a mixture of stevioside in combination with rebaudiosid A, rebaudioside B, rebaudioside C, rebaudioside D, rebaudioside E, stevioside, and/or dulcoside A.

In a preferred embodiment in combination with any of the above or below embodiments, the amount of glucosylated steviol glycosides is at least 50 % by weight, more preferable at least 60 % by weight, in particular at least 65 % by weight, based on the total weight of component a).

In a further preferred embodiment in combination with any of the above or below embodiments, component a) comprises 10 to 20 % by weight of stevioside, 5 to 15 % by weight of Rebaudioside A and at least 50 % by weight of glucosylated steviol glycosides, based on the total weight of component a).

In another preferred embodiment in combination with any of the above or below embodiments, the glucosylated steviol glycoside contains at least 50 % by weight of mono- and diglucosylated steviol glycosides, more preferably at least 60 % by weight, in particular at least 70 % by weight, based on the total weight of the glucosylated steviol glycoside.

In a further preferred embodiment in combination with any of the above or below embodiments, in component a) all of the steviol glycosides are glucosylated.

In a preferred embodiment in combination with any of the above or below embodiments, the glucosylated steviol glycoside is glucosylated stevioside, glucosylated Rebaudisoide A, glucosylated rebaudioside C, glucosylated dulcoside, glucosylated rubusoside, glucosylated steviolbioside, glucosylated rebaudioside B, glucosylated rebaudioside D, glucosylated rebaudioside E and glucosylated rebaudioside F with various degrees of glucosylation or mixtures thereof.

In a preferred embodiment in combination with any of the above or below embodiments, the glucosylated steviol glycoside comprises at least one glucose unit at position C-19 of the steviol glycoside.

In a preferred embodiment in combination with any of the above or below embodiments, the total amount of steviol glycosides (glucosylated and non-glucosylated steviol glycosides) has a purity of at least 60 % by weight, more preferable of at least 80 % by weight and most preferable of at least 95 % by weight, based on the total weight of the dry matter.

The carob tree, *Ceratonia siliqua*, is a species of flowering evergreen shrub or tree in the pea family, *Fabaceae*, that is native to the Mediterranean region. The fruit of the carob tree is an indehiscent pod, elongated, compressed, straight or curved, thickened at the sutures, 10-30 cm long, 1.5-3.5 cm wide and about 1 cm thick. Pods are brown with a wrinkled surface and are leathery when ripe. The pulp comprises an outer leathery layer (pericarp) and softer inner region (mesocarp).

In a preferred embodiment in combination with any of the above or below embodiments, the aqueous extract from carob in step i) is an aqueous extract from carob pulp.

In a preferred embodiment in combination with any of the above or below embodiments, the aqueous extract from carob in step i) has 14-20 °Brix, more preferably 16-18 °Brix.

The term "° Brix" (degrees Brix, °Bx) refers to a unit representing the soluble solid content in a solution. One degree Brix corresponds to 1 g of sucrose in 100 g of sucrose/water solution and thus represents the concentration of the solution as a percentage by weight (% w/w). A solution has 1 °Brix if the density of said solution is the same as a solution of 1 gram of sucrose in 100 grams of sucrose/water solution. The °Brix is usually measured by means of a refractometer using the industrial standard IFU 8.

Citrus is a genus of flowering plants in the family Rutaceae, originating in tropical and subtropical southeast regions of the world. Citrus fruits are notable for their fragrance, partly due to flavonoids and limonoids contained in the rind, and most are juice-laden. The juice contains a high quantity of citric acid giving them their characteristic sharp flavor.

In a preferred embodiment in combination with any of the above or below embodiments, the citrus fruit is selected from the group consisting of orange, tangerine, grapefruit, clementine, lemon, lime or mixtures thereof, more preferably orange.

In a preferred embodiment in combination with any of the above or below embodiments, the aqueous extract from a citrus fruit in step i) has 2-6 °Brix, more preferably 3-5 °Brix. Preferably, the aqueous extract from a citrus fruit in step i), in particular the aqueous extract from orange in step i), is concentrated to 60-65 °Brix.

In the present invention in step i) the aqueous extract is obtained from carob alone, a citrus fruit alone or a combination of carob and a citrus fruit. To obtain an aqueous extract from carob and a citrus fruit, the aqueous extract from carob and the citrus fruit can be prepared separately and can then be combined, or carob and the citrus fruit are mixed first and the mixture of carob and citrus fruit is extracted. In a preferred embodiment in combination with any of the above or below embodiments, the extracts are prepared separately and then combined.

In a preferred embodiment in combination with any of the above or below embodiments, the aqueous extract from step i) is an aqueous extract from carob and an aqueous extract from a citrus fruit. Preferably, the aqueous extract from carob and the aqueous extract from the citrus fruit are mixed in a ratio of 1-99 % by weight of the aqueous extract of carob and 99-1 % by weight of the aqueous extract of the citrus fruit, more preferably 30-90 % by weight of the aqueous extract of carob and 70-10 % by weight of the aqueous extract of the citrus fruit, in particular 55-80 % by weight of the aqueous extract from carob and 20-45 % by weight of the aqueous extract from the citrus fruit, based on the total weight of the extract in step i).

In a preferred embodiment in combination with any of the above or below embodiments, the product of step i) is a mixture of an aqueous extract of carob and an aqueous extract of a citrus fruit and has 34-53 °Brix.

In a preferred embodiment in combination with any of the above or below embodiments, the product of step i) is heated to 50-60 °C before being fractionated in step ii).

In a preferred embodiment in combination with any of the above or below embodiments, the fractionating in step ii) comprises fractionating on a cation exchange resin. More preferably, the cation exchange resin is a weakly reticulated cation exchange resin, which is activated but not in the hydrogen form. In a preferred embodiment in combination with any of the above or below embodiments, the cation exchange resin is in the sodium or potassium form. In a preferred embodiment in combination with any of the above or below embodiments, the cation exchange resin is a strong acid cation resin, more preferably the resin is a polystyrene having sulfonic acid groups, e.g. available under the tradename Diaion UBK 530® or UBK 555® (Resindion-Milan).

In a preferred embodiment in combination with any of the above or below embodiments, the eluent in step ii) is water, in particular osmotised water. The term "osmotised water" as used herein designates a reverse osmosis water with a maximum conductivity of 10 MicroSiemens/cm at 25 °C.

In a preferred embodiment in combination with any of the above or below embodiments, the fractionating in step ii) comprises applying the product of step i) to the cation exchange resin. Thereupon, a first fraction comprising polysaccharides, polyols, proteins, free amino acids, fibers, fats and polyphenols is collected. Preferably, the first fraction has a dark and intensive brownish-reddish color, and 0.5-1.5 °Brix. The collection of the first fraction is stopped when the eluent leaving the resin is colorless.

In a preferred embodiment in combination with any of the above or below embodiments, water, more preferably osmotised water, is applied to the cation exchange resin after collecting the first fraction. Thereupon, a second fraction of ionized molecules comprising minerals and organic acids is collected. This fraction is preferably colorless and has about 4-6 °Brix. The collection of the second fraction is stopped when the eluent leaving the column is colored.

In a preferred embodiment in combination with any of the above or below embodiments, a subsequent intermediate fraction is re-circulated onto the cation exchange resin or discarded, more preferably re-circulated onto the cation exchange resin, after collecting the second fraction. Preferably, this intermediate fraction is clear, has a pale brownish color and <0.3 °Brix. The end of the intermediate fraction is indicated by the appearance of a colorless fraction having 15-30 °Brix.

In a preferred embodiment in combination with any of the above or below embodiments, after re-circulating or discarding the intermediate fraction, a third fraction is collected. Preferably, this third fraction comprising monosaccharides and disaccharides, is colorless and has 15-30 °Brix. The collection of the third fraction is preferably stopped when the eluent leaving the resin has <15 °Brix.

In a preferred embodiment in combination with any of the above or below embodiments, the product of step iii) is further concentrated to have 15-25 °Brix. Preferably, a plate heat exchanger under vacuum conditions is used for this concentration step.

In a preferred embodiment in combination with any of the above or below embodiments, the product of step iii) has a pH of 4-7, preferably a pH of 5-6.

In a preferred embodiment in combination with any of the above or below embodiments, the product of step iii) is subsequently filtered, preferably using a metallic fine filter having a screen mesh size of less than 10 µm.

In a preferred embodiment in combination with any of the above or below embodiments, the product of step iii) is further formulated with L-ascorbic acid (vitamin C), more preferably at a concentration of 0.5-0.9 g/L.

In a preferred embodiment in combination with any of the above or below embodiments, the product of step iii) is further formulated with a food carrier. The food carrier is preferably selected from the group consisting of arabic gum, maltodextrin, betacyclodextrin or modified starch, more preferably arabic gum. The modified starch is selected from acid-treated starch, alkaline-treated starch, bleached starch, oxidized starch, enzyme-treated starch, acetylated starch and/or acetylated oxidized starch, preferably acid-treated starch.

In a preferred embodiment in combination with any of the above or below embodiments, the content of food carrier in the natural masking agent ranges from 25-45 % by weight, preferably from 30-40 % by weight, of the total solids.

In a preferred embodiment in combination with any of the above or below embodiments, the product of step iii) is subsequently dried, more preferably spray dried, e.g. at a temperature of 90-100 °C, to yield the natural masking agent.

In a preferred embodiment in combination with any of the above or below embodiments, the natural masking agent comprises 4.5-6.9 % by weight, preferably 5-5.9 % by weight, proteins.

In a preferred embodiment in combination with any of the above or below embodiments, the natural masking agent comprises 6.2-9.6 % by weight, preferably 7.2-8.6% by weight, free amino acids.

In a preferred embodiment in combination with any of the above or below embodiments, the natural masking agent comprises 32-37 % by weight, preferably 33-36% by weight, fibers.

In a preferred embodiment in combination with any of the above or below embodiments, the natural masking agent comprises <0.1 % by weight insoluble fibers.

In a preferred embodiment in combination with any of the above or below embodiments, the natural masking agent comprises 37-45 % by weight, preferably 39-43 % by weight, minerals.

In a preferred embodiment in combination with any of the above or below embodiments, the natural masking agent comprises 2.4-3.1 % by weight, preferably 2.6-2.9 % by weight, organic acids.

In a preferred embodiment in combination with any of the above or below embodiments, the natural masking agent comprises 0.65-1.2 % by weight, preferably 0.85-1.0 % by weight, volatile organic acids.

In a preferred embodiment in combination with any of the above or below embodiments, the natural masking agent comprises <0.1 % by weight fats.

In a preferred embodiment in combination with any of the above or below embodiments, the natural masking agent comprises 1.9-2.3 % by weight, preferably 2.0-2.2 % by weight, polyphenols.

In a preferred embodiment in combination with any of the above or below embodiments, the natural masking agent comprises 0.1-0.3% by weight, preferably about 0.2% by weight, flavonoids, preferably citrus flavonoids, as polyphenols.

In a preferred embodiment in combination with any of the above or below embodiments, the natural masking agent comprises 4.5-6.9 % by weight proteins, 6.2-9.6 % by weight free amino acids, 32-37 % by weight fibers, 37-45 % by weight minerals, 2.4-3.1 % by weight organic acids, <0.1 % by weight fats and 1.9-2.3 % by weight polyphenols.

In a further preferred embodiment, the composition of the present invention comprises at least one glucosylated steviol glycoside and a natural masking agent comprising an aqueous extract of carob and a citrus fruit, wherein the aqueous extract comprises 4.5-6.9 % by weight proteins, 6.2-9.6 % by weight free amino acids, 32-37 % by weight fibers, 37-45 % by weight minerals, 2.4-3.1 % by weight organic acids, <0.1 % by weight fats and 1.9-2.3 % by weight polyphenols.

The natural masking agent has preferably one or more, most preferably all of the following characteristics:
The moisture is preferably at most 10 % by weight.
The pH (solution in water with 1% w/v) is preferably 5.0 to 8.0.
The total acidity is preferably at most 400 mEq/kg.
The specific gravity is preferably 0.4-0.6 g/mL.
The amino-nitrogen content is preferably 1.1-1.4 g/100g.

The natural masking agent is preferably highly hygroscopic and has a clear pale brown color.

In a preferred embodiment in combination with any of the above or below embodiments, the natural masking agent is soluble in water in a pH range of 2-10.

In a preferred embodiment in combination with any of the above or below embodiments, the composition of the present invention further contains a natural and/or artificial sweetener, more preferably a sweetener selected from aspartame, acesulfame, cyclamate, sucralose, neo-hesperidine, and/or thaumatin. Most preferably, the composition consists of natural components.

In another preferred embodiment in combination with any of the above or below embodiments, the weight ratio of component a) to natural masking agent (component b) is from 20 : 1 to 1 : 1; more preferably from 10 : 1 to 2 : 1, in particular from 8 : 1 to 6 : 1.

In another embodiment in combination with any of the above or below embodiments, the composition of the present invention is used as a flavor modifier, flavor enhancer or sweetness enhancer in a foodstuff. The foodstuff according to the present invention is preferably a beverage, confectionery, a bakery product, a dairy product, ice cream or chocolate.

In a preferred embodiment in combination with any of the above or below embodiments, the composition of the present invention is further formulated with a food carrier. The food carrier is preferably selected from the group consisting of arabic gum, maltodextrin, betacyclodextrin or modified starch, more preferably maltodextrin. The modified starch is selected from acid-treated starch, alkaline-treated starch, bleached starch, oxidized starch, enzyme-treated starch, acetylated starch and/or acetylated oxidized starch, preferably acid-treated starch. The composition of the present invention is preferably formulated with maltodextrin, in particular at a ratio of 1 part maltodextrin and 1 part of the composition of the present invention for use in a foodstuff.

In a further preferred embodiment in combination with any of the above or below embodiments, the concentration of the flavor modifier, flavor enhancer or sweetness enhancer in the foodstuff is below sweetness detection level. Thus, the flavor modifier, flavor enhancer or sweetness enhancer according to the present invention does not contribute to the sweetness overproportional in comparison to the change of other desired flavour characteristics. The flavor modifier, flavor enhancer or sweetness enhancer according to the present invention is added to a foodstuff in an amount of 10 to 120 mg/kg, based on a formulation comprising 1 part maltodextrin and 1 part of the composition.

In a further embodiment in combination with any of the above or below embodiments, the present invention provides a method of preparing the composition of the present invention. Preferably, in the step of intermolecular transglucosylation the obtained glucosylated steviol glycosides contain at least 50 % by weight of mono- and diglucosylated steviol glycosides, more preferably at least 60 % by weight, in particular at least 70 % by weight, based on the total weight of the glucosylated steviol glycoside.

It was further found that the flavor modifying composition works in a wide range of food products, especially in beverages such as carbonated soft drinks, fruit juices, and dairy foods such as yoghurt or other liquid flavored dairy beverages.

The following examples further describe the invention.

### Examples:

### Example 1: Taste comparison in orange lemonade

Commercial glucosyl stevia extract was provided by Sunwin Stevia international. According to the specification, the extract contains >95 % by weight of steviol glycosides, based on the total weight of the extract, of which > 65 % by weight are glucosylated. Analytical investigation showed that more than 50 % by weight of the glucosylated fraction contains less than 3 additional glucose units resulting from the glucosylation process. 50.9 g of this glucosylated stevia product was dry mixed with 6 g of a masking agent which was produced as follows:
1000 kg of carob pulp were extracted by water-diffusion with 3000 I of water (50 °C) to yield an aqueous extract of carob having 17 °Brix. This extract was decanted and centrifuged in a decanter centrifuge and pasteurized. Finally the extract was clarified by means of ultrafiltration in order to give a clear carob extract having 15-16 °Brix.
1000 kg of orange pulp were subjected to a milling and grinding step and subsequently extracted by mixing with 2500 I of water. This mixture was pressed to yield an extract of orange pulp having 4 °Brix which was decanted and centrifuged in a decanter centrifuge and pasteurized. Finally the extract was clarified by means of ultrafiltration in order to give a clear orange extract having 3 °Brix. This extract was concentrated on a plate heat exchanger under vacuum to 65 °Brix.

The clear carob extract and the clear orange extract concentrate were mixed in a ratio of 60 % by weight of clear carob extract and 40 % by weight of clear orange extract concentrate and had 36-37 °Brix.

This mixture was heated to 55 °C and subsequently fractionated by applying the mixture on a column filled with the cation exchange resin Diaion UBK 555® (Resindion). The column had a diameter of 0.9 m and a height of 8 m resulting in a resin bed a volume of approximately 4500 I.

The first collected fraction had a dark and intensive brownish-reddish color and 0.5-1.5 °Brix.

Reverse osmosis water was entered into the system as eluent and subsequently a second fraction was collected. This second fraction was colorless and had 4-6 °Brix.

The first and second fraction were mixed and concentrated on a plate heat exchanger under vacuum to about 20 °Brix. L-ascorbic acid was added to the mixture to give a final concentration of 0.7 g/l. Arabic gum was added to the mixture to be present in a concentration of 35 % by weight, based on the total amount of solids.

The concentrated mixture was subsequently spray dried at a temperature of about 95 °C to yield a natural masking agent having the following characteristics:
Constituents based on the extract of carob and orange in powder form: about 5.5 % by weight proteins, about 7.9 % by weight free amino acids, about 35 % by weight fibers, about 41 % by weight minerals, about 2.8 % by weight organic acids, < 0.1 % by weight fats, about 2.1 % by weight polyphenols and about 5,6 % water.
Content of Arabic gum based on total amount of solids: about 35 % by weight.
The moisture was < 10 % by weight.
The pH (solution in water with 1 % w/v) was about 6.5.
The total acidity was < 400 mEq/kg.
The specific gravity was about 0.5 g/ml.

The mixture of glucosylated steviol glycoside and masking agent was added to a commercial orange lemonade in a concentration 56.9 mg/L and compared with the same lemonade were only 50.9 mg/L of the glucosylated steviol glycoside compound without the masking agent was added.

Both lemonades were compared by a panel of trained experts (N=5). In a descriptive forced-choice test it was found that the lemonade containing the mixture of glucosylated stevia and masking agent was generally favored. The reason was that it had an all-over more intense orange taste and a more rounded sweetness compared to the lemonade that contained only glucosyl stevia as a flavor modifier.

### Example 2: Taste comparison in strawberry yoghurt

The mixture of glucosylated steviol glycoside and masking agent described in Example 1 was added to a commercial strawberry flavored yoghurt in a concentration 56.9 mg/L and compared with the same yoghurt where only 50.9 mg/L of the glucosylated steviol glycoside compound without the masking agent was added.

A sensory evaluation according to Example 1 showed that the yoghurt containing the mixture of glucosylated stevia and masking agent was generally preferred and had a more intense strawberry taste and a more rounded sweetness compared to the yoghurt that contained only glucosyl stevia.

### Example 3: Taste comparison in lemonade with reduced calories

The mixture of glucosylated steviol glycoside and masking agent described in Example 1 was added to a commercial calorie reduced lemonade (Libella Apple-cherry partly sweetened with stevia) in a concentration 56.9 mg/L and compared with the same Lemonade were only 50.9 mg/L of the glucosylated steviol glycoside compound without the masking agent was added.

A sensory evaluation according to example 1 showed that the calorie reduced lemonade containing the mixture of glucosylated stevia and masking agent had a more intense fruit flavor and a more rounded sweet taste compared to the calorie reduced lemonade that contained only glucosyl stevia as flavor modifier and was thus generally preferred.

## Claims

1. A composition comprising:
a) a mixture of steviol glycosides comprising at least one glucosylated steviol glycoside, and
b) a natural masking agent, said natural masking agent being obtainable from carob and/or a citrus fruit by a process comprising the steps of:
i) obtaining an aqueous extract from carob and/or an aqueous extract from a citrus fruit;
ii) fractionating the product of step i) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides; and
iii) mixing the first fraction and the second fraction.

2. The composition of claim 1, wherein component a) comprises 10 to 20 % by weight of stevioside, 5 to 15 % by weight of Rebaudioside A and at least 50 % by weight of glucosylated steviol glycosides, based on the total weight of component a).

3. The composition of claim 1 or 2, wherein the natural masking agent comprises 4.5 to 6.9 % by weight of protein, 6.2 to 9.6 % by weight of free amino acids, 32 to 37 % by weight of fiber, 37 to 45 % by weight of minerals, 2.4 to 3.1 % by weight of organic acids and 1.9 to 2.3 % by weight of polyphenols.

4. The composition of any one of claims 1 to 3, wherein the glucosylated steviol glycoside contains at least 50 % by weight of mono- and diglucosylated steviol glycosides based on the total weight of the glucosylated steviol glycosides.

5. The composition of any one of claims 1 to 4, wherein the glucosylated steviol glycoside comprises at least one glucose unit at position C-19 of the steviol glycoside.

6. The composition of any one of claims 1 to 5, wherein the citrus fruit is orange, tangerine, grapefruit, clementine, lemon or lime or mixtures thereof.

7. The composition of claim 6, wherein the citrus fruit is orange.

8. The composition of any one of claims 1 to 7, wherein the ratio of component a) to natural component b) is from 10 : 1 to 1 : 1.

9. Flavor modifier, flavor enhancer or sweetness enhancer comprising the composition of any one of claims 1 to 8.

10. Foodstuff, comprising the flavor modifier, flavor enhancer or sweetness enhancer of claim 9.

11. Use of the composition of any one of claims 1 to 8 as a flavor modifier, flavor enhancer or sweetness enhancer in a foodstuff.

12. The use of claim 11, wherein the concentration of the flavor modifier, flavor enhancer or sweetness enhancer in the foodstuff is below sweetness detection level.

13. The use of claim 11 or 12, wherein the foodstuff is a beverage, confectionery, a bakery product, a dairy product, ice cream or chocolate.

14. Method of preparing the composition of any one of claims 1 to 8 comprising the steps of:
i) intermolecular transglucosylating at least one steviol glycoside to obtain a mixture of steviol glycosides comprising at least one glucosylated steviol glycoside;
ii) obtaining an aqueous extract from carob and/or an aqueous extract from a citrus fruit;
iii) fractionating the product of step ii) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides;
iv) mixing the first fraction and the second fraction; and
v) mixing the glucosylated steviol glycoside of step i) and the mixture of step iv).

15. The method of claim 14, wherein the glucosylated steviol glycoside obtained in step i) contains at least 50 % by weight of mono- and diglucosylated steviol glycosides based on the total weight of the glucosylated steviol glycosides.

## Patentansprüche

1. Zusammensetzung, umfassend:
a) ein Gemisch von Steviolglycosiden, umfassend mindestens ein glucosyliertes Steviolglycosid und
b) ein natürliches Maskierungsmittel, wobei das natürliche Maskierungsmittel erhältlich ist aus Johannisbrot und/oder einer Zitrusfrucht durch ein Verfahren, umfassend die Schritte von:
i) Erhalten eines wässrigen Extrakts aus Johannisbrot und/oder eines wässrigen Extrakts aus einer Zitrusfrucht;
ii) Fraktionieren des Produkts von Schritt i), um eine erste Fraktion zu erhalten, umfassend Polysaccharide, Polyole, Proteine, freie Aminosäuren, Fasern, Fette und Polyphenole; eine zweite Fraktion von ionisierten Molekülen, umfassend Mineralstoffe und organische Säuren; und eine dritte Fraktion, umfassend Monosaccharide und Disaccharide; und
iii) Mischen der ersten Fraktion und der zweiten Fraktion.

2. Zusammensetzung nach Anspruch 1, wobei Komponente a) 10 bis 20 Gewichts-% von Steviosid, 5 bis 15 Gewichts-% von Rebaudiosid A und mindestens 50 Gewichts-% von glucosylierten Steviolglycosiden umfasst, basierend auf dem Gesamtgewicht von Komponente a).

3. Zusammensetzung nach Anspruch 1 oder 2, wobei das natürliche Maskierungsmittel 4,5 bis 6,9 Gewichts-% Protein, 6,2 bis 9,6 Gewichts-% freie Aminosäuren, 32 bis 37 Gewichts-% Faser, 37 bis 45 Gewichts-% Mineralien, 2,4 bis 3,1 Gewichts-% organische Säuren und 1,9 bis 2,3 Gewichts-% Polyphenole umfasst.

4. Zusammensetzung nach einem der Ansprüche 1 bis 3, wobei das glucosylierte Steviolglycosid mindestens 50 Gewichts-% von mono- und diglucosylierten Steviolglycosiden enthält, basierend auf dem Gesamtgewicht der glucosylierten Steviolglycosiden.

5. Zusammensetzung nach einem der Ansprüche 1 bis 4, wobei das glucosylierte Steviolglycosid mindestens eine Glucoseeinheit in Position C-19 des Steviolglycosids umfasst.

6. Zusammensetzung nach einem der Ansprüche 1 bis 5, wobei die Zitrusfrucht Orange, Mandarine, Grapefruit, Clementine, Zitrone oder Limette oder Gemische davon ist.

7. Zusammensetzung nach Anspruch 6, wobei die Zitrusfrucht Orange ist.

8. Zusammensetzung nach einem der Ansprüche 1 bis 7, wobei das Verhältnis von Komponente a) zu natürlicher Komponente b) von 10 : 1 bis 1 : 1 beträgt.

9. Geschmacksmodifizierer, Geschmacksverstärker oder Süsskraftverstärker, umfassend die Zusammensetzung nach einem der Ansprüche 1 bis 8.

10. Lebensmittel, umfassend den Geschmacksmodifizierer, Geschmacksverstärker oder Süsskraftverstärker nach Anspruch 9.

11. Verwendung der Zusammensetzung nach einem der Ansprüche 1 bis 8 als Geschmacksmodifizierer, Geschmacksverstärker oder Süsskraftverstärker in einem Lebensmittel.

12. Verwendung nach Anspruch 11, wobei die Konzentration des Geschmacksmodifizierers, Geschmacksverstärkers oder Süsskraftverstärkers in dem Lebensmittel unterhalb des Süsskraftdetektionsspiegels liegt.

13. Verwendung nach Anspruch 11 oder 12, wobei das Lebensmittel ein Getränk, Konfekt, ein Bäckereiprodukt, ein Milchprodukt, Eiscreme oder Schokolade ist.

14. Verfahren zum Herstellen der Zusammensetzung nach einem der Ansprüche 1 bis 8, umfassend die Schritte von:
i) intermolekulare Transglucosylierung mindestens eines Steviolglycosids, um ein Gemisch von Steviolglycosiden, umfassend mindestens ein glucosyliertes Steviolglycosid zu erhalten;
ii) Erhalten eines wässrigen Extrakts aus Johannisbrot und/oder eines wässrigen Extrakts aus einer Zitrusfrucht;
iii) Fraktionieren des Produkts von Schritt ii), um eine erste Fraktion zu erhalten, umfassend Polysaccharide, Polyole, Proteine, freie Aminosäuren, Fasern, Fette und Polyphenole; eine zweite Fraktion von ionisierten Molekülen, umfassend Mineralstoffe und organische Säuren; und eine dritte Fraktion, umfassend Monosaccharide und Disaccharide; und
iv) Mischen der ersten Fraktion und der zweiten Fraktion; und
v) Mischen des glucosylierten Steviolglycosids von Schritt i) und dem Gemisch von Schritt iv).

15. Verfahren nach Anspruch 14, wobei das in Schritt i) erhaltene glucosylierte Steviolglycosid mindestens 50 Gewichts-% mono- und diglucosylierte Steviolglycoside enthält, basierend auf dem Gesamtgewicht der glucosylierten Steviolglycoside.

## Revendications

1. Composition comprenant :
a) un mélange de glycosides de stéviol comprenant au moins un glycoside de stéviol glucosylé, et
b) un agent de masquage d'origine naturelle, ledit agent de masquage d'origine naturelle pouvant être obtenu à partir de fruit de caroube et/ou de *Citrus* selon un procédé comprenant les étapes de :
i) obtention d'un extrait aqueux de caroube et/ou d'un extrait aqueux d'un fruit de *Citrus* ;
ii) fractionnement du produit de l'étape i) pour obtenir une première fraction comprenant des polysaccharides, des polyols, des protéines, des acides aminés libres, des fibres, des graisses et des polyphénols ; une seconde fraction de molécules ionisées comprenant des minéraux et des acides organiques ; et une troisième fraction comprenant des monosaccharides et des disaccharides ; et
iii) mélange de la première fraction et de la seconde fraction.

2. Composition selon la revendication 1, dans laquelle le constituant a) comprend de 10 à 20 % en poids de stévioside, de 5 à 15 % en poids de rébaudioside A et au moins 50 % en poids de glycosides de stéviol glucosylés, sur la base du poids total du constituant a).

3. Composition selon la revendication 1 ou 2, l'agent de masquage d'origine naturelle comprenant de 4,5 à 6, 9 % en poids de protéine, de 6,2 à 9, 6 % en poids d'acides aminés libres, de 32 à 37 % en poids de fibre, de 37 à 45 % en poids de minéraux, de 2,4 à 3,1 % en poids d'acides organiques et de 1,9 à 2,3 % en poids de polyphénols.

4. Composition selon l'une quelconque des revendications 1 à 3, le glycoside de stéviol glucosylé contenant au moins 50 % en poids de glycosides de stéviol mono- et diglucosylés sur la base du poids total des glycosides de stéviol glucosylés.

5. Composition selon l'une quelconque des revendications 1 à 4, le glycoside de stéviol glucosylé comprenant au moins un motif glucose à la position C-19 du glycoside de stéviol.

6. Composition selon l'une quelconque des revendications 1 à 5, dans laquelle le fruit de *Citrus* est l'orange, la mandarine, le pamplemousse, la clémentine, le citron ou la limette ou leurs mélanges.

7. Composition selon la revendication 6, le fruit de *Citrus* étant l'orange.

8. Composition selon l'une quelconque des revendications 1 à 7, dans laquelle le rapport du constituant a) au constituant d'origine naturelle b) est de 10:1 à 1:1.

9. Agent de modification de la flaveur, activateur de flaveur ou activateur du goût sucré comprenant la composition selon l'une quelconque des revendications 1 à 8.

10. Produit alimentaire, comprenant l'agent de modification de la flaveur, l'activateur de flaveur ou l'activateur du goût sucré selon la revendication 9.

11. Utilisation de la composition selon l'une quelconque des revendications 1 à 8 comme agent de modification de la flaveur, activateur de flaveur ou activateur du goût sucré dans un produit alimentaire.

12. Utilisation selon la revendication 11, la concentration de l'agent de modification de la flaveur, de l'activateur de flaveur ou de l'activateur du goût sucré dans le produit alimentaire étant inférieure au niveau de détection du goût sucré.

13. Utilisation selon la revendication 11 ou 12, le produit alimentaire étant une boisson, une confiserie, un produit de boulangerie, un produit laitier, une crème glacée ou du chocolat.

14. Procédé de préparation de la composition selon l'une quelconque des revendications 1 à 8 comprenant les étapes de :
i) transglucosylation intermoléculaire d'au moins un glycoside de stéviol pour obtenir un mélange de glycosides de stéviol comprenant au moins un glycoside de stéviol glucosylé ;
ii) obtention d'un extrait aqueux de caroube et/ou d'un extrait aqueux d'un fruit de *Citrus* ;
iii) fractionnement du produit de l'étape ii) pour obtenir une première fraction comprenant des polysaccharides, des polyols, des protéines, des acides aminés libres, des fibres, des graisses et des polyphénols ; une seconde fraction de molécules ionisées comprenant des minéraux et des acides organiques ; et une troisième fraction comprenant des monosaccharides et des disaccharides ;
iv) mélange de la première fraction et de la seconde fraction ; et
v) mélange du glycoside de stéviol glucosylé de l'étape i) et du mélange de l'étape iv).

15. Procédé selon la revendication 14, le glycoside de stéviol glucosylé obtenu dans l'étape i) contenant au moins 50 % en poids de glycosides de stéviol mono- et diglucosylés sur la base du poids total des glycosides de stéviol glucosylés.
